# EUROPEAN PATENT APPLICATION

(11) **EP 2 426 589 A2**
(43) Date of publication of application: **07.03.2012**
(21) Application number: 11179554.8
(22) Date of filing: 31.08.2011
(51) Int. Cl.: G06F 3/048

(54) **Electronic device, computer-implemented method and computer-implemented computer-readable storage medium**

(30) Priority: 07.09.2010 JP 2010200149
(71) Applicant: Sony Corporation, Tokyo 108-0075 (JP)
(72) Inventor: Narita, Tomoya, Minato-ku, Tokyo 108-0075 (JP); Kano, Ritsuko, Minato-ku, Tokyo 108-0075 (JP); Kasahara, Shunichi, Minato-ku, Tokyo 108-0075 (JP)
(74) Representative: Mills, Julia

(57) **Abstract**

An interface is provided that employs systems and methods for detecting non-contact motion and contact motion of an operation member. The interface detects non-contact motion of an operation member and determines whether the member has crossed a boundary. In response to detecting that the operation member has crossed a boundary, the interface may initiate the execution of a process. This process may be the display of a second boundary, or some other process. The interface may also detect contact motion of the operation member and initiate execution of a process based on the contact motion.

## Description

The present disclosure relates to an information processing apparatus, an information processing method and an information processing program.

In recent years, a touch panel capable of detecting a touch made by an operating body has been popularized. Since the touch panel is capable of detecting a position touched by the operating body, the user is capable of sensing the position touched by the operating body. For details, the reader is advised to refer to Japanese Patent Laid-Open No. 2010-157189.

In addition, a touch panel capable of detecting an approach made by an operating body has also been popularized. Since the touch panel is capable of detecting a position approached by the operating body, the user is capable of grasping information on the position approached by the operating body.

If a direct operation device such as the ordinary touch panels described above is used, however, the direct operation device raises problems described as follows. In order to specify a desired position, it is necessary to specify the coordinates of the desired position. Then, in order to carry out predetermined processing such as some operations to confirm an object located at the specified coordinates, it is necessary to enter a special gesture command such as an operation to press a button like the button of a mouse device or an operation to double-click the button.

It is thus desirable to present a new and improved technology allowing predetermined processing to be carried out with ease by an information processing apparatus capable of detecting the movement of the operating body in a noncontact way.

Various respective aspects and features of the invention are defined in the appended claims. Combinations of features from the dependent claims may be combined with features of the independent claims as appropriate and not merely as explicitly set out in the claims.

Disclosed is a device. The device may include a processor. The device may also include a display. The device may further include an interface. The interface may be configured to detect non-contact motion of an operation member. The interface may be further configured to determine, from the detected motion, whether the member crosses a first boundary defined by the display. The interface may be further configured to initiate execution of a first process by the processor, when it is determined that the member crosses the first boundary.

Also disclosed is a computer-implemented method. The method may include detecting non-contact motion of an operation member. The method may also include determining, from the detected motion, whether the member crosses a first boundary defined by a display. The method may further include initiating execution of a first process by the processor, when it is determined that the member crosses the first boundary.

Also disclosed is a tangibly embodied computer-readable storage medium including instructions that, when executed by a processor, perform a method. The method may include detecting non-contact motion of an operation member. The method may also include determining, from the detected motion, whether the member crosses a first boundary defined by a display. The method may further include initiating execution of a first process by the processor, when it is determined that the member crosses the first boundary.

As described above, in accordance with the present disclosure, it is possible to allow an information processing apparatus capable of detecting the movement of an operating body in a noncontact way to carry out predetermined processing with ease.

Embodiments of the invention will now be described with reference to the accompanying drawings, throughout which like parts are referred to by like references, and in which:

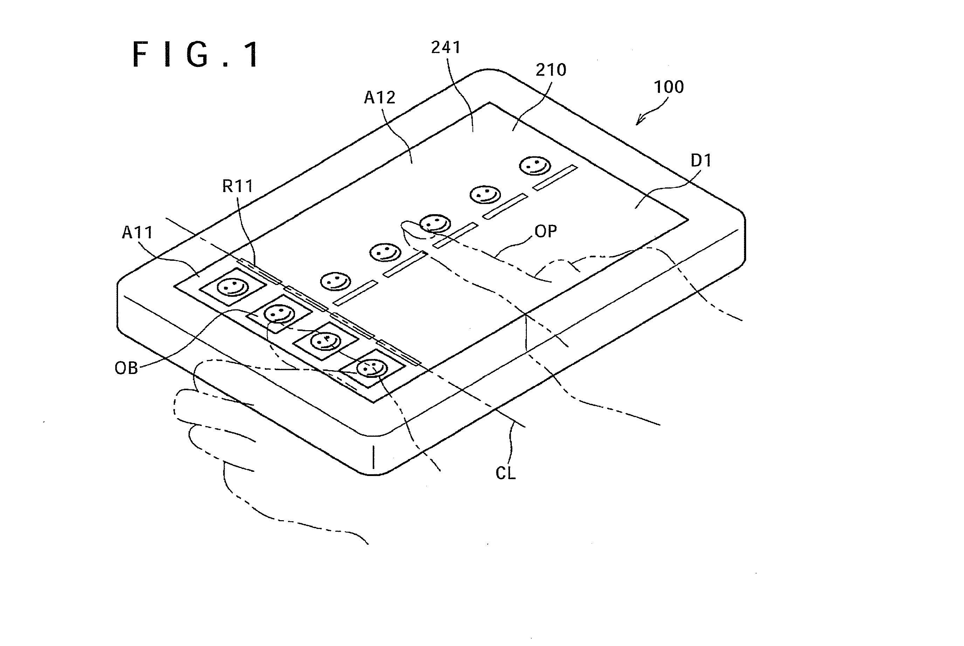

Fig. 1 is an explanatory diagram to be referred to in description of an outline of an information processing apparatus according to an embodiment of the present disclosure;

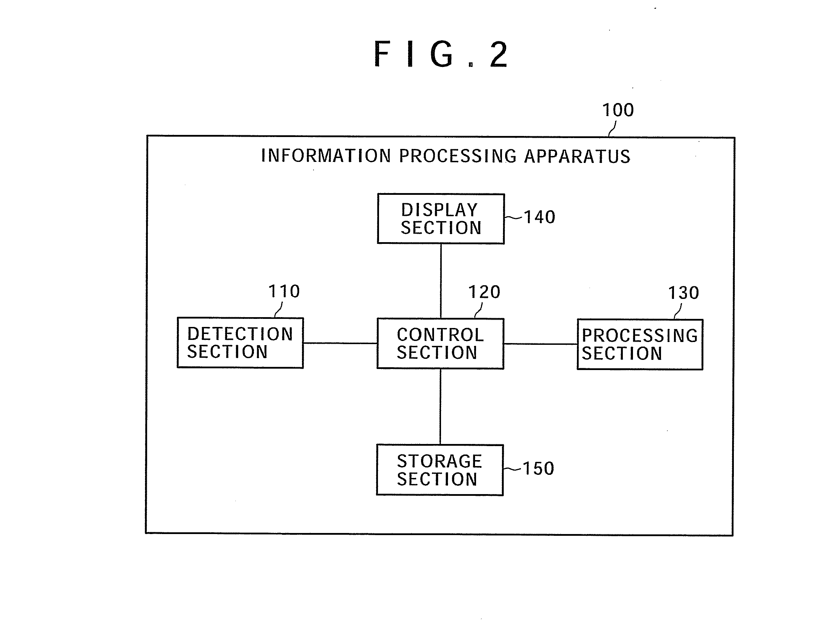

Fig. 2 is a diagram showing the functional configuration of the information processing apparatus according to the embodiment of the present disclosure;

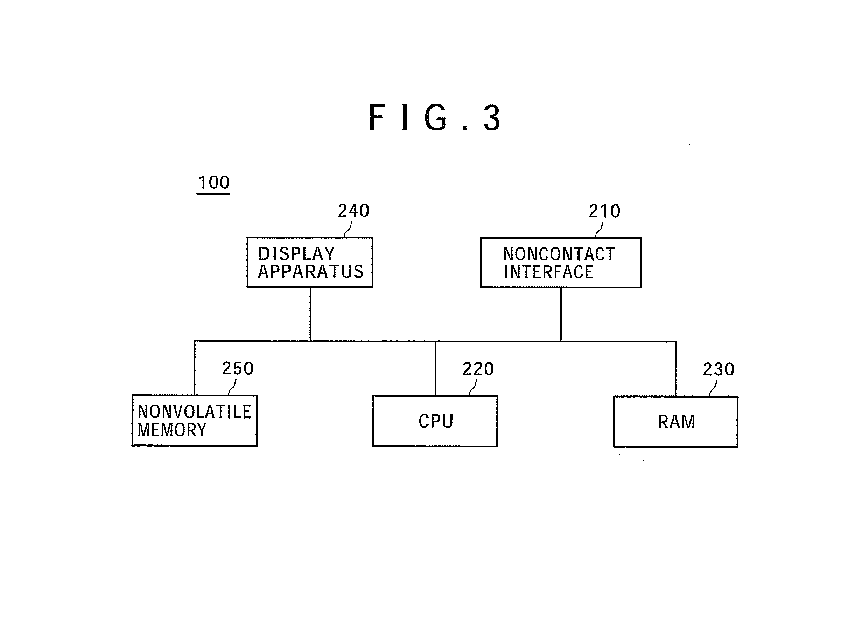

Fig. 3 is a diagram showing the hardware configuration of the information processing apparatus according to the embodiment of the present disclosure;

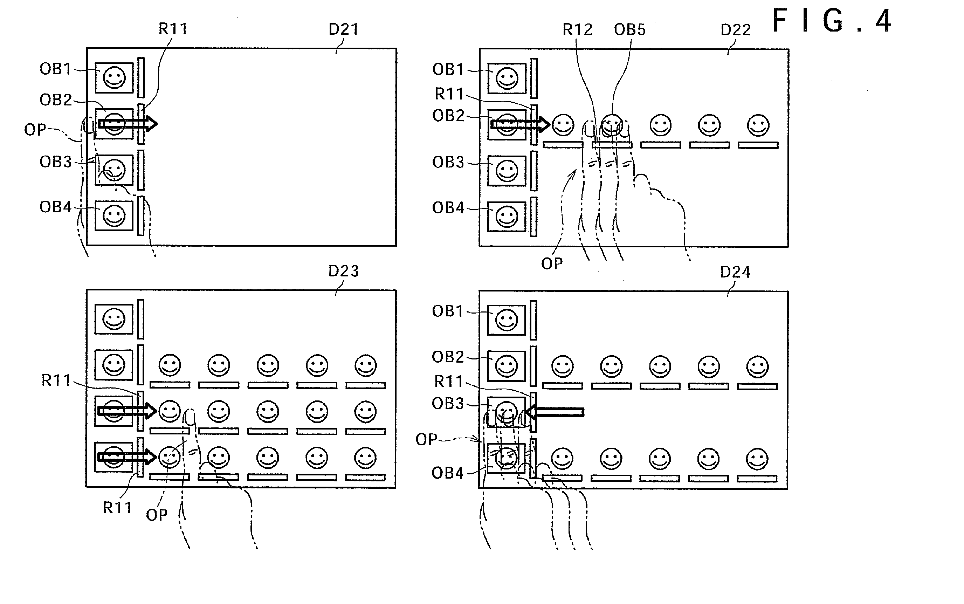

Fig. 4 is a plurality of diagrams to be referred to in description of first typical processing carried out by the information processing apparatus according to the embodiment of the present disclosure if the information processing apparatus determines that a detected movement of an operating body has crossed an area boundary;

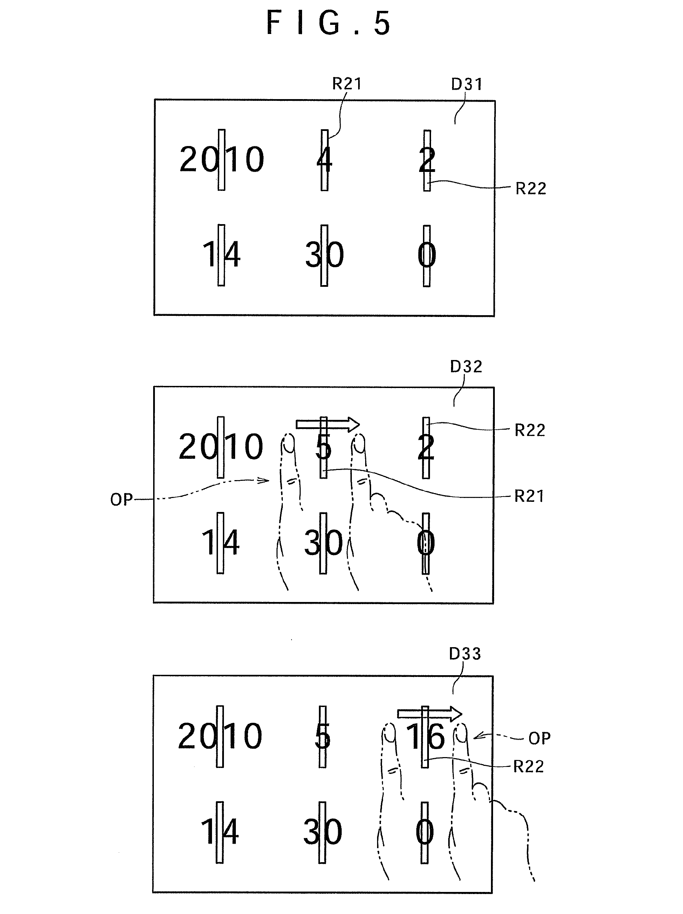

Fig. 5 is a plurality of diagrams to be referred to in description of second typical processing carried out by the information processing apparatus according to the embodiment of the present disclosure if the information processing apparatus determines that a detected movement of the operating body has crossed an area boundary;

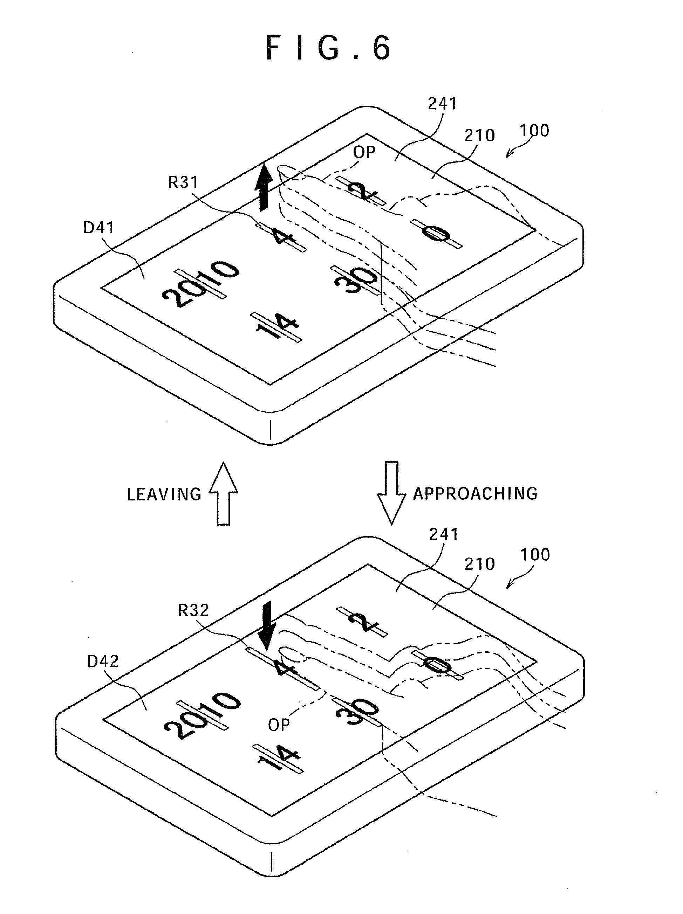

Fig. 6 is a plurality of diagrams to be referred to in description of typical processing carried out by the information processing apparatus according to the embodiment of the present disclosure if the information processing apparatus no longer detects an operating body;

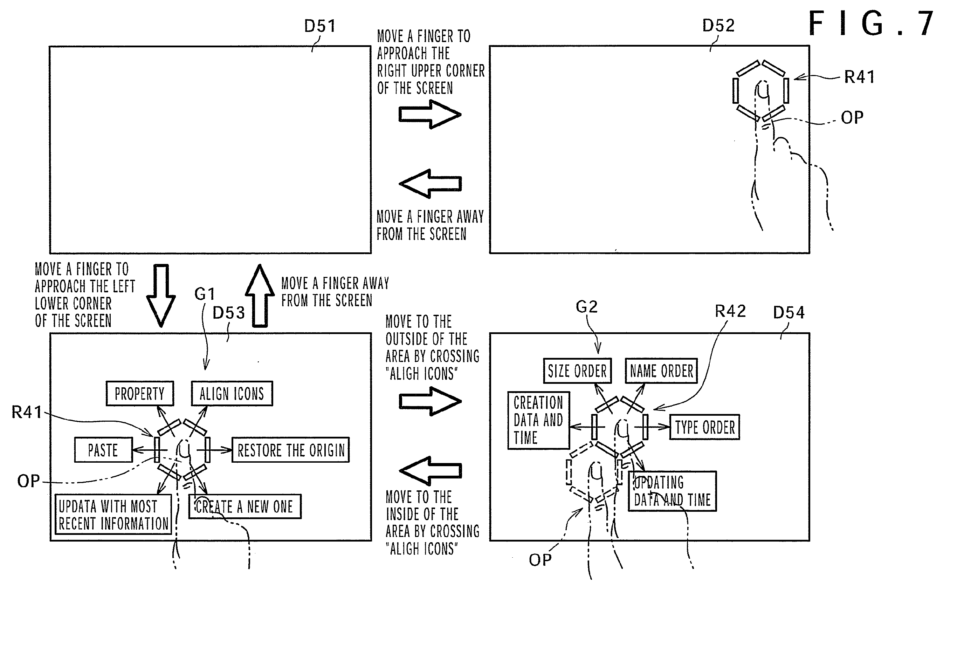

Fig. 7 is a plurality of diagrams to be referred to in description of third typical processing carried out by the information processing apparatus according to the embodiment of the present disclosure if the information processing apparatus determines that a detected movement of the operating body has crossed an area boundary;

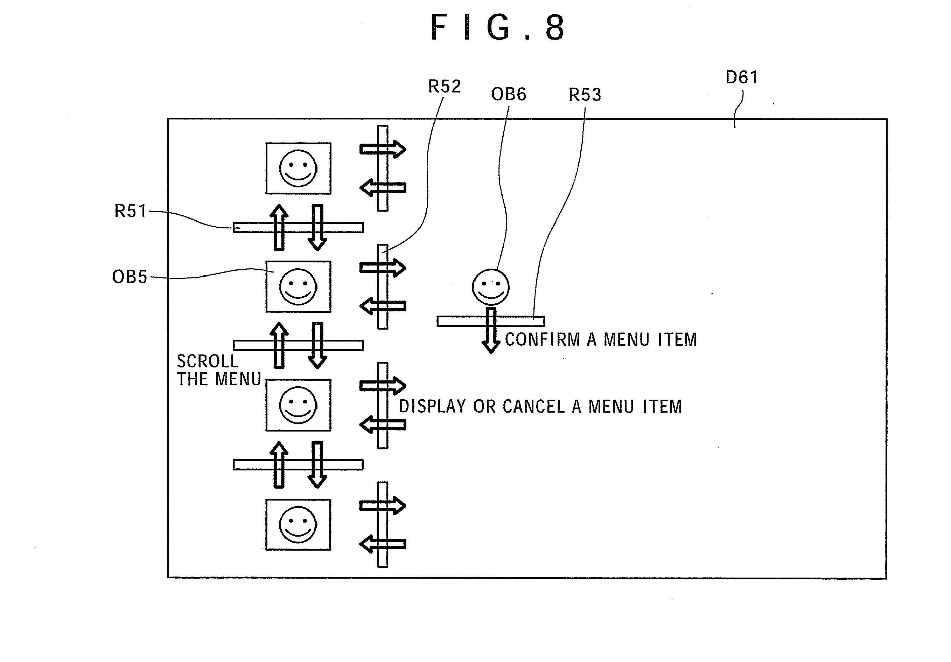

Fig. 8 is a diagram to be referred to in description of fourth typical processing carried out by the information processing apparatus according to the embodiment of the present disclosure if the information processing apparatus determines that a detected movement of the operating body has crossed an area boundary;

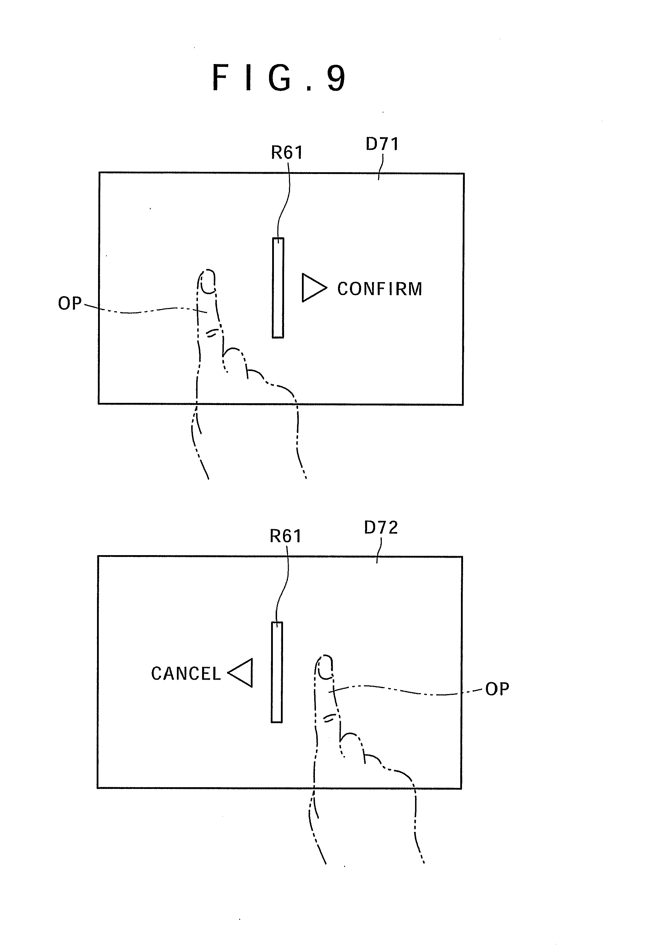

Fig. 9 is a plurality of diagrams to be referred to in description of fifth typical processing carried out by the information processing apparatus according to the embodiment of the present disclosure if the information processing apparatus determines that a detected movement of the operating body has crossed an area boundary;

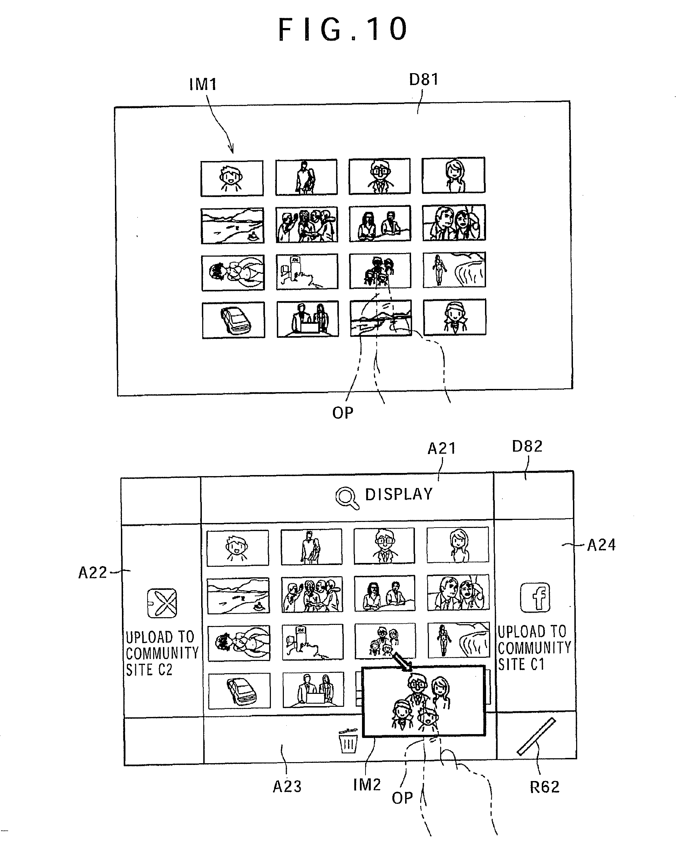

Fig. 10 is a plurality of diagrams to be referred to in description of sixth typical processing carried out by the information processing apparatus according to the embodiment of the present disclosure if the information processing apparatus determines that a detected movement of the operating body has crossed an area boundary;

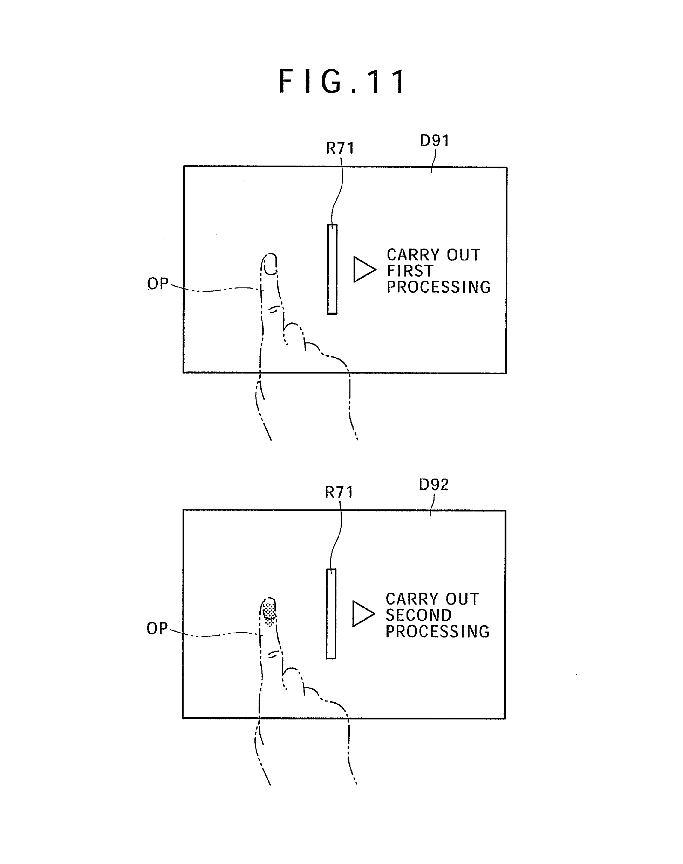

Fig. 11 is a plurality of diagrams to be referred to in description of seventh typical processing carried out by the information processing apparatus according to the embodiment of the present disclosure if the information processing apparatus determines that a detected movement of the operating body has crossed an area boundary;

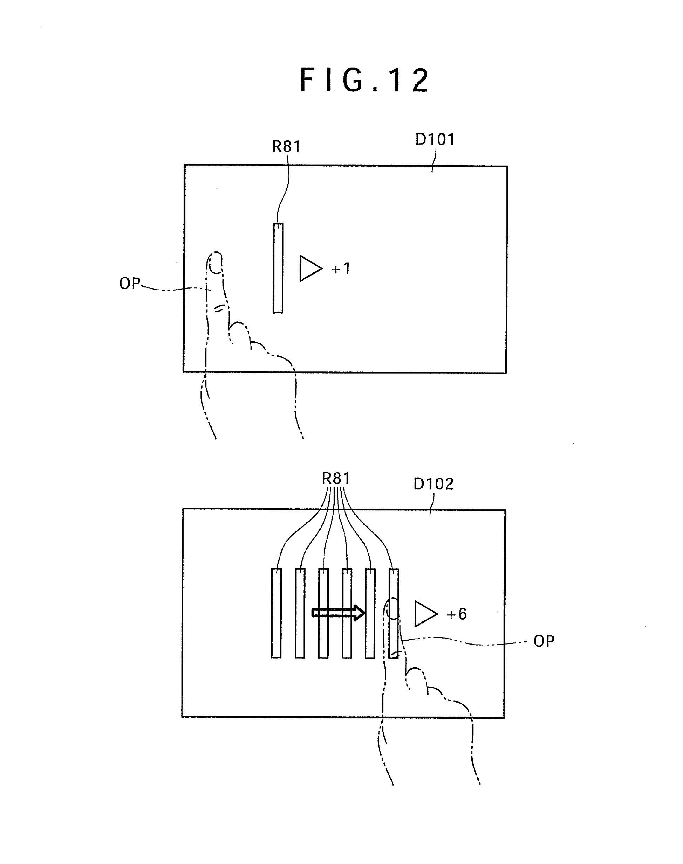

Fig. 12 is a plurality of explanatory diagrams to be referred to in description of eighth typical processing carried out by the information processing apparatus according to the embodiment of the present disclosure if the information processing apparatus determines that a detected movement of the operating body has crossed an area boundary;

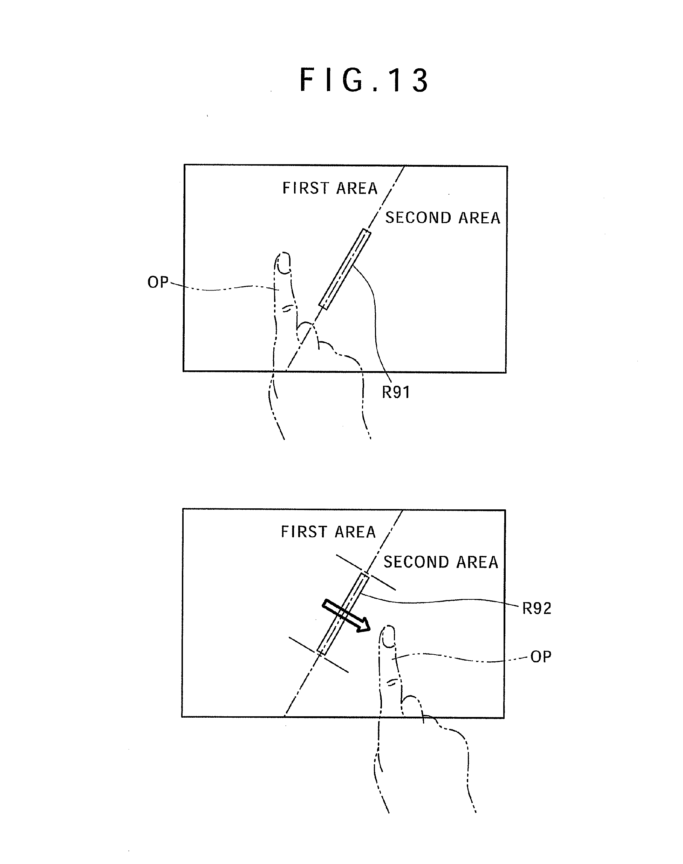

Fig. 13 is a plurality of diagrams to be referred to in description of details of a technique adopted by the information processing apparatus according to the embodiment of the present disclosure to detect a movement of the operating body as a movement that has crossed an area boundary; and

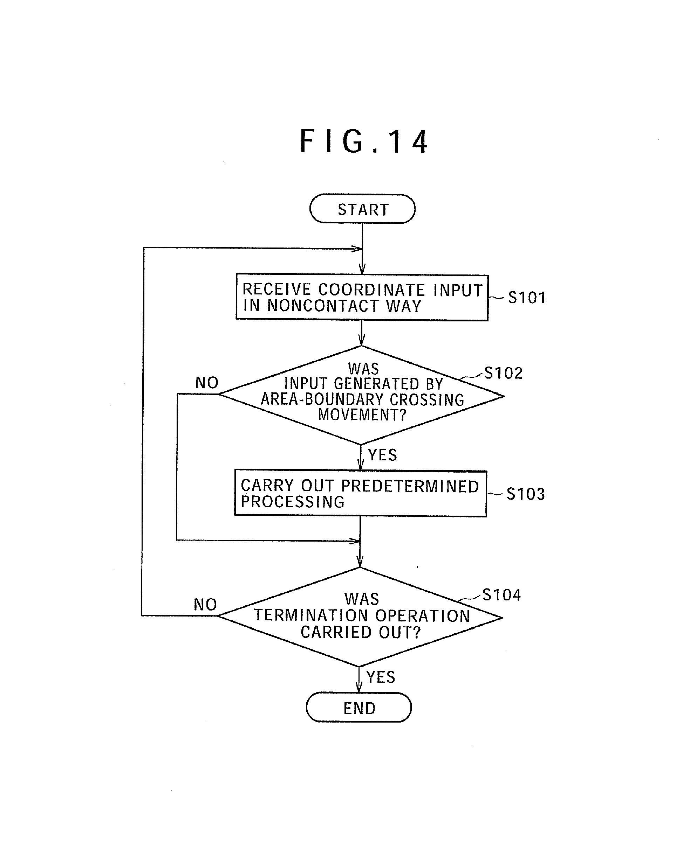

Fig. 14 shows a flowchart representing the flow of processing carried out by the information processing apparatus according to the embodiment of the present disclosure.

A preferred embodiment of the present disclosure is explained below in detail by referring to appended diagrams. It is to be noted that, in the specification of the present disclosure and in the diagrams, configuration elements having essentially the same functional configuration are denoted by the same reference numeral or the same reference notation and the functional configuration of the configuration elements is explained only once in order to avoid duplications of descriptions.

In addition, the embodiment of the present disclosure is described in chapters arranged as follows:
1: Embodiment
1-1: Outline of the Information Processing Apparatus
1-2: Functional Configuration of the Information Processing Apparatus
1-3: Hardware Configuration of the Information Processing Apparatus
1-4: First Typical Processing for an Operating Body Having Moved to Cross an Area Boundary
1-5: Second Typical Processing for an Operating Body Having Moved to Cross an Area Boundary
1-6: Processing Carried Out for No Operating Body Detected
1-7: Third Typical Processing for an Operating Body Having Moved to Cross an Area Boundary
1-8: Fourth Typical Processing for an Operating Body Having Moved to Cross an Area Boundary
1-9: Fifth Typical Processing for an Operating Body Having Moved to Cross an Area Boundary 1-10: Sixth Typical Processing for an Operating Body Having Moved to Cross an Area Boundary
1-11: Seventh Typical Processing for an Operating Body Having Moved to Cross an Area Boundary
1-12: Eighth Typical Processing for an Operating Body Having Moved to Cross an Area Boundary
1-13: Details of a Technique for Detecting a Movement Made by an Operating Body to Cross an Area Boundary
1-14: Flow of Processing Carried Out by the Information Processing Apparatus
2: Modifications
3: Conclusions

### 1: Embodiment

### 1-1: Outline of the Information Processing Apparatus

Fig. 1 is an explanatory diagram referred to in the following description of an outline of an information processing apparatus 100 according to an embodiment of the present disclosure. When a noncontact interface 210 employed in the information processing apparatus 100 according to the embodiment of the present disclosure detects a movement of an operating body OP, the information processing apparatus 100 determines whether or not the movement has crossed an area boundary such as a boundary CL defined by separating areas A11 and A12 from each other. If the information processing apparatus 100 determines that the movement has crossed an area boundary, the information processing apparatus 100 carries out predetermined processing. In the following description, the noncontact interface 210 detects a movement of an operating body OP by detecting the closeness of the operating body OP to the noncontact interface 210. However, the technique adopted by the noncontact interface 210 as a technique for detecting a movement of an operating body OP is by no means limited to this technique of detecting the closeness of the operating body OP to the noncontact interface 210.

In the typical configuration shown in Fig. 1, the information processing apparatus 100 according to the embodiment of the present disclosure includes a display screen D1 showing objects OB set thereon. Positions on the noncontact interface 210 are associated with their respective positions on a display surface 241 under management carried out by the information processing apparatus 100 according to the embodiment of the present disclosure. Thus, the information processing apparatus 100 according to the embodiment of the present disclosure is capable of detecting a position close to the operating body OP as proximity coordinates in order to determine that a position on the display surface 241 at the proximity coordinates has been specified. By the same token, the information processing apparatus 100 according to the embodiment of the present disclosure is capable of detecting a position close to the operating body OP as touched-position coordinates in order to determine that a position on the display surface 241 at the touched-position coordinates has been specified.

By carrying out the control described above, the information processing apparatus 100 capable of detecting a movement of the operating body OP in a noncontact way is capable of carrying out the predetermined processing with ease. In the typical configuration shown in Fig. 1, the information processing apparatus 100 determines that a movement of the operating body OP has crossed the area boundary CL defined by the display screen and separating areas A11 and A12 from each other and, then, carries out processing in accordance with an object OB, which is determined on the basis of the movement of the operating body OP, as the predetermined processing. In the typical configuration shown in Fig. 1, the processing carried out in accordance with an object OB determined on the basis of the movement of the operating body OP is processing to sequentially display items of a menu associated with the object OB.

In accordance with the configuration described above, the user is allowed to request the information processing apparatus 100 to carry out the predetermined processing such as a confirmation operation if coordinates specified by the operating body OP are changed. In addition, it is possible to designate an operation to be carried out when specified coordinates have crossed a boundary defined by a line segment on the screen and carry out the designated operation when the specified coordinates have crossed the line segment.

### 1-2: Functional Configuration of the Information Processing Apparatus

Fig. 2 is a diagram showing the functional configuration of the information processing apparatus 100 according to the embodiment of the present disclosure. The information processing apparatus 100 according to the embodiment of the present disclosure is provided with at least a detection section 110, a control section 120 and a processing section 130.

The detection section 110 is provided with the noncontact interface 210 and has a function for detecting a movement of the operating body OP in a noncontact way. As described above, the operation to detect a movement of the operating body OP in a noncontact way is carried out typically by detecting the closeness of the operating body OP to the noncontact interface 210. In the operation to detect the closeness of the operating body OP to the noncontact interface 210, the detection section 110 is capable of detecting a position, which exists on the noncontact interface 210 as a position close to the operating body OP, as proximity coordinates.

A typical example of the so-called close operation carried out by making use of the operating body OP is an operation to move the operating body OP with the operating body OP put in a state of being close to the noncontact interface 210. In the following description, the operation to move the operating body OP with the operating body OP put in a state of being close to the noncontact interface 210 is referred to as a proximity drag operation. To put it concretely, a movement made by the operating body OP in a proximity drag operation is a movement made by the operating body OP put in a state of being close to the noncontact interface 210. The movement made by the operating body OP put in a state of being close to the noncontact interface 210 can be any movement as long as the movement provides information that can be grasped. For example, the grasped information is the direction of the movement made by the operating body OP put in a state of being close to the noncontact interface 210 and/or the distance of the movement. The movement made by the operating body OP put in a state of being close to the noncontact interface 210 is a movement made by the operating body OP sustaining the a state of being close to the noncontact interface 210 in a direction parallel to the noncontact interface 210.

In addition, the detection section 110 may also be provided with a function for detecting a touch made by the operating body OP. The detection section 110 is capable of carrying out such a function in order to detect a position, which exists on the noncontact interface 210 as a position touched by the operating body OP, as touched-position coordinates. A contact operation carried out by making use of the operating body OP is an operation to move the operating body OP in a state of being already brought into contact with the noncontact interface 210. In the following description, the operation to move the operating body OP in a state of being already brought into contact with the noncontact interface 210 is referred to as a contact drag operation. To put it concretely, a movement made by the operating body OP in a contact drag operation is a movement made by the operating body OP put in a state of being already brought into contact with the noncontact interface 210. The movement made by the operating body OP put in a state of being already brought into contact with the noncontact interface 210 can be any movement as long as the movement provides information that can be grasped. For example, the grasped information is the direction of the movement made by the operating body OP put in a state of being already brought into contact with the noncontact interface 210 and/or the distance of the movement.

Another typical example of the contact operation carried out by making use of the operating body OP is an operation to bring the operating body OP into contact with the noncontact interface 210. In the following description, the operation to bring the operating body OP into contact with the noncontact interface 210 is referred to as a touch operation.

The control section 120 has a function for determining whether or not a movement detected by the detection section 110 as the movement of the operating body OP has crossed an area boundary defined by the display and separating the areas A11 and A12. For example, as explained earlier by referring to Fig. 1, the control section 120 is capable of determining whether or not a proximity drag operation carried out by the operating body OP has resulted in a movement detected by the detection section 110 as the movement of the operating body OP from the area A11 to the area A12.

In addition, the control section 120 is capable of carrying out control to display a portion of the area boundary CL between the areas A11 and A12 or all of the area boundary CL as a line segment R11. Then, the control section 120 is capable of determining whether or not a movement detected by the detection section 110 as the movement of the operating body OP has crossed an area boundary between areas A11 and A12 by determining whether or not the movement has crossed the line segment R11. By carrying out such control, it is possible to grasp information on a position to which the user should move the operating body OP in order to request the information processing apparatus 100 to carry out the predetermined processing in accordance with the position.

In addition, the control section 120 is also capable of carrying out control to display a cursor in accordance with a position identified by proximity coordinates detected by the detection section 110 as a position on the display surface 241. The control section 120 is also capable of carrying out control to display a cursor CN at a position identified by the proximity coordinates detected by the detection section 110 as a position on the display surface 241. The control section 120 is also capable of carrying out control to take a position identified by the proximity coordinates detected by the detection section 110 as a reference position on the display surface 241 and display a cursor CN at another position shifted from the reference position by a predetermined distance in a predetermined direction.

The control section 120 may also determine whether the operating body OP detected by the detection section 110 is in a state of being already brought into contact with the noncontact interface 210 or being close to the noncontact interface 210. If the detection section 110 is capable of detecting a predetermined parameter varying in accordance with the distance between the noncontact interface 210 and the operating body OP for example, the control section 120 is capable of determining whether the operating body OP is in a state of being already brought into contact with the noncontact interface 210 or being close to the noncontact interface 210 in accordance with the detected value of the predetermined parameter.

For example, at a detected value of the predetermined parameter, the control section 120 determines that the operating body OP is not in a state of being close to the noncontact interface 210. Such a detected value of the predetermined parameter is referred to as a reference value. In this case, the detection section 110 compares a change of the predetermined parameter from the reference value with a close-state detection threshold value. If the detection section 110 finds out that the change of the predetermined parameter from the reference value is greater than the close-state detection threshold value for example, the control section 120 determines that the operating body OP detected by the detection section 110 is in a state of being close to the noncontact interface 210.

By the same token, if the detection section 110 finds out that the change of the predetermined parameter is greater than even a contact-state detection threshold value for example, the control section 120 determines that the operating body OP detected by the detection section 110 is in a state of being already brought into contact with the noncontact interface 210.

Thus, it is assumed that, even if the control section 120 determines that the operating body OP detected by the detection section 110 is not in a state of being already brought into contact with the noncontact interface 210, the control section 120 may determine that the operating body OP is in a state of being already brought into contact with the noncontact interface 210 in some cases. Accordingly, the state of being already brought into contact with the noncontact interface 210 can be said to be a concept including a state in which the degree of closeness of the operating body OP to the noncontact interface 210 is high.

The processing section 130 has a function which is executed for carrying out predetermined processing if the control section 120 determines that the movement of the operating body OP has crossed an area boundary. The predetermined processing is not specially limited to certain processing. In the typical configuration explained earlier by referring to Fig. 1, however, the predetermined processing is processing carried out for an object OB determined on the basis of the movement of the operating body OP. In the typical configuration explained earlier by referring to Fig. 1, the processing carried out for a moved object OB is processing to sequentially display items of a menu provided for the object OB on the display surface 241.

The information processing apparatus 100 may be further provided with a display section 140. The display section 140 is typically configured as a display apparatus. In this case, the display section 140 is provided with the display surface 241 which can be used for displaying data selected by the control section 120 and data to be displayed. In addition, the display section 140 can also be used for displaying various kinds of information at a stage at which the processing section 130 carries out the predetermined processing.

In accordance with control executed by the control section 120, the display section 140 typically displays data on the display surface 241. In the typical configuration explained earlier by referring to Fig. 1, the display section 140 is capable of displaying objects OB and items of a menu provided for each of the objects OB on the display surface 241 in accordance with control executed by the control section 120. In addition, in accordance with control executed by the control section 120, the display section 140 is capable of moving a cursor to proximity coordinates on the display surface 241.

The information processing apparatus 100 may be further provided with a storage section 150. The storage section 150 is typically configured as a storage apparatus such as a nonvolatile memory. The storage section 150 has a function to store programs implementing sections such as the control section 120 and the processing section 130 as well as a function to store various kinds of data which is used when the programs are being executed. In the case of the typical configuration described above, the data stored in the storage section 150 includes the close-state detection threshold value and the contact-state detection threshold value.

The sections including the control section 120 and the processing section 130 are configured to employ typically components such as a CPU (Central Processing Unit) and a RAM (Random Access Memory). The CPU carries out a function thereof by executing a program loaded from the storage section 150 to the RAM. However, the sections including the control section 120 and the processing section 130 are not necessarily configured to employ components such as a CPU and a RAM. For example, any of the sections including the control section 120 and the processing section 130 may also be configured as dedicated hardware.

### 1-3: Hardware Configuration of the Information Processing Apparatus

Fig. 3 is a diagram showing the hardware configuration of the information processing apparatus 100 according to the embodiment of the present disclosure. As shown in Fig. 3, the information processing apparatus 100 according to the embodiment of the present disclosure is configured to employ a noncontact interface 210, a CPU 220, a RAM 230, a display apparatus 240 and a nonvolatile memory 250.

The noncontact interface 210 has a function to detect a movement of the operating body OP in a contact or noncontact way. By carrying out this function, for example, the noncontact interface 210 is capable of detecting a variety of operations carried out by making use of the operating body OP. For example, the noncontact interface 210 is capable of detecting a predetermined parameter varying in accordance with the distance between the noncontact interface 210 and the operating body OP and capable of making use of the detected parameter to determine whether the operating body OP has been brought into contact with the noncontact interface 210 or is close to the noncontact interface 210.

For example, an electrostatic touch panel can be used as the noncontact interface 210. By making use of an electrostatic touch panel as the noncontact interface 210, it is possible to detect a change in electrostatic capacitance as a predetermined parameter varying in accordance with the distance between the noncontact interface 210 and the operating body OP. In addition, as another example, an optical touch panel can also be used as the noncontact interface 210. By making use of an optical touch panel as the noncontact interface 210, it is possible to detect a change in incident-light intensity as a predetermined parameter varying in accordance with the distance between the noncontact interface 210 and the operating body OP.

On top of that, as a further example, a USB (Universal Serial Bus) camera can also be used as the noncontact interface 210. By making use of a USB camera as the noncontact interface 210 in conjunction with another device, it is possible to detect a predetermined parameter to be used for determining whether the operating body OP has been brought into contact with the noncontact interface 210 or is close to the noncontact interface 210.

Functioning as a processing apparatus and a control apparatus, the CPU 220 executes programs stored in the nonvolatile memory 250 and the RAM 230 in order to control general operations carried out in the information processing apparatus 100 or some of the operations.

The RAM 230 is used for storing programs to be executed by the CPU 220 and data changing during execution of the programs. A typical example of such data is parameters.

The display apparatus 240 is typically an LCD (Liquid Crystal Display) apparatus or an organic EL (Electroluminescence) display apparatus. The display apparatus 240 is configured to function as an apparatus for visually notifying the user of information. The display apparatus 240 typically displays results of various kinds of processing carried out by the information processing apparatus 100. To put it concretely, the display apparatus 240 displays results of various kinds of processing, which is carried out by the information processing apparatus 100, as texts and/or images. In addition, the display apparatus 240 can be provided inside the information processing apparatus 100 or externally to the information processing apparatus 100.

The nonvolatile memory 250 is an apparatus used for storing data. The nonvolatile memory 250 is configured as typically a magnetic storage device, a semiconductor device, an optical storage device or an opto-magnetic storage device. A typical example of the magnetic storage device is an HDD (Hard Disk Drive). The nonvolatile memory 250 is used for storing programs to be executed by the CPU 220 and various kinds of data.

The above description explains a typical hardware configuration capable of carrying out the functions of the information processing apparatus 100 according to the embodiment of the present disclosure. Each of the elements composing the hardware configuration can be a general purpose member or hardware designed specially to carry out the function of the element. Thus, the hardware configuration used for realizing the information processing apparatus 100 according to the embodiment of the present disclosure can be properly modified in accordance with the technological level implementing the embodiment.

### 1-4: First Typical Processing for an Operating Body Having Moved to Cross an Area Boundary

Fig. 4 is a plurality of diagrams referred to in the following description of first typical processing carried out by the information processing apparatus 100 according to the embodiment of the present disclosure if the information processing apparatus 100 detects a movement of the operating body, that is, operation member, OP and determines that the movement has crossed an area boundary. In the left upper diagram of Fig. 4, the processing section 130 displays a typical screen D21 showing objects OB1 to OB4 set thereon and a line segment R11 associated with an area provided for each of the objects OB1 to OB4.

When the control section 120 determines that a movement of the operating body OP has crossed a boundary defined by the line segment R11 associated with the object OB2 in a predetermined direction which is typically the right horizontal direction, as shown in the right upper diagram of Fig. 4, the processing section 130 displays a screen D22 showing objects OB5 associated with the object OB2 determined on the basis of the movement. Each of the objects OB5 is typically a menu item. A line segment R12 used for confirming, that is, selecting, a particular one of the objects OB5 has been set at a location close to the particular object OB5. In the relation between the object OB2 and the objects OB5, the object OB2 is the parent item serving as a menu whereas each of the objects OB5 is a child item serving as an item of the menu. The line segment R12 used for confirming a particular object OB5 serving as an item of the menu will be described later.

By the same token, when the control section 120 determines that a movement of the operating body OP has crossed a boundary defined by the line segment R11 associated with the object OB3 in a predetermined direction which is typically the right horizontal direction, as shown in the left lower diagram of Fig. 4, the processing section 130 displays a screen showing objects OB5 associated with the object OB3 determined on the basis of the movement. In the same way, when the control section 120 later on determines that a movement of the operating body OP has crossed a boundary defined by the line segment R11 associated with the object OB4 in a predetermined direction which is typically the right horizontal direction, as shown in the left lower diagram of Fig. 4, the processing section 130 displays a screen showing objects OB5 associated with the object OB4 determined on the basis of the movement. A screen D23 shown in the left lower diagram of Fig. 4 is a screen showing objects OB5 associated with the object OB3 and objects OB5 associated with the object OB4. The screen D23 simultaneously shows a plurality of objects each serving as a child item so that the user can visually compare the objects with each other.

In addition, when the control section 120 determines that a movement of the operating body OP has crossed a boundary defined by the line segment R11 associated with the object OB3 in a direction opposite to a predetermined direction, for example, the left horizontal direction as shown in the right lower diagram of Fig. 4, the processing section 130 displays a screen D24 from which the objects OB5 associated with the object OB3 determined on the basis of the movement have been erased as shown in the same diagram. As is obvious from the above descriptions, when the control section 120 determines that a movement of the operating body OP detected by the detection section 110 has crossed an area boundary, the control section 120 is capable of recognizing the direction in which the movement of the operating body OP has crossed the area boundary. To put it concretely, the control section 120 is also capable of recognizing the direction in which the movement of the operating body OP has crossed a boundary defined by line segment R12. To put it concretely, the control section 120 is also capable of determining whether the direction in which the movement of the operating body OP has crossed a boundary defined by a line segment R12 is a predetermined direction which is typically the left-to-right horizontal direction or a direction opposite to the predetermined direction. The direction opposite to the predetermined direction is thus the right-to-left horizontal direction. Then, the processing section 130 carries out the predetermined processing in accordance with the direction recognized by the control section 120.

As described above, the direction in which coordinates specified by the operating body OP cross a boundary defined by a line segment shown on a screen can be used to define two different types of processing. In addition, the operation to display the objects OB5 associated with the object OB3 is the reverse of the operation to delete the objects OB5. Since the operation to display the objects OB5 is carried out as a specific gesture whereas the operation to delete the objects OB5 is carried out as a gesture opposite to the specific gesture, there is provided a merit that the operations are easy to understand in an intuitive way.

### 1-5: Second Typical Processing for an Operating Body Having Moved to Cross an Area Boundary

Fig. 5 is a plurality of diagrams referred to in the following description of second typical processing carried out by the information processing apparatus 100 according to the embodiment of the present disclosure if the information processing apparatus 100 detects a movement of the operating body OP and determines that the movement has crossed an area boundary. The top diagram of Fig. 5 displays a screen D31 showing typical objects set by the control section 120 as numbers '2010,' '4,' '2,' '14,' '30' and '0.' The screen D31 also shows a line segment R21 for each of the objects.

It is possible to provide a configuration in which, if the control section 120 determines that a movement of the operating body OP has crossed a boundary defined by a line segment R21, the processing section 130 carries out processing to change the value of an object, which is determined on the basis of the movement, as the predetermined processing. For example, if the control section 120 determines that a movement of the operating body OP has crossed a boundary defined by the line segment R21 in a predetermined direction such as typically the right horizontal direction, the processing section 130 carries out processing to increment the value '4' of an object determined on the basis of the movement to an object represented by the value of '5' and display a screen D32 showing the value of '5' as shown in the middle diagram of Fig. 5.

By the same token, if the control section 120 determines that a movement of the operating body OP has crossed a boundary defined by a line segment R22 in a predetermined direction such as typically the right horizontal direction, the processing section 130 carries out processing to increment the value '2' of an object determined on the basis of the movement to an object represented by the value of '3' and display a screen showing the value of '3.' If the same movement of the operating body OP is carried out repeatedly, the processing section 130 carries out processing to increment the value '2' of an object determined on the basis of the movement to an object represented by the value of '3,' increment the value '3' of the object to an object represented by the value of '4' and so on. Finally, the processing section 130 carries out processing to increment the value of the object to an object represented by the value of '16' and display a screen D33 showing the value of '16' as shown in the bottom diagram of Fig. 5.

In addition, if the control section 120 determines that a movement of the operating body OP has crossed a boundary defined by a line segment R21 in a direction opposite to the predetermined direction, that is, in the left horizontal direction, on the other hand, the processing section 130 carries out processing to decrement the value '4' of an object determined on the basis of the movement to an object represented by the value of '3' and display a screen showing the value of '3.' As described above, the direction in which coordinates specified by the operating body OP cross a boundary defined by a line segment shown on a screen can be used to increment or decrement a numerical value. That is to say, if an object determined on the basis of a movement of the operating body OP is a number, processing to increment or decrement the value of the number in accordance with the movement direction recognized by the control section 120 can be carried out as the predetermined processing.

By providing the configuration described above, it is no longer necessary to have two buttons at two different locations respectively. That is to say, by displaying a line segment as a bar across a numerical value, the numerical value can be incremented or decremented. By displaying such a line segment, it is not necessary to occupy areas on a screen and it is yet possible carry out an operation on each of a plurality of numbers displayed at the same plurality of locations on the screen.

As described above, in order to increment a numerical value, it is necessary carry out an operation to move the operating body OP across an area boundary in the right horizontal direction. However, in order to increment a numerical value, an operation to move the operating body OP across an area boundary needs to be carried out not necessarily in the right horizontal direction. In the case of a configuration in which a line segment R21 is oriented in the left-to-right direction for example, the line segment R21 separates two adjacent areas in the top-to-bottom direction. In such a configuration, in order to increment a numerical value, it is necessary carry out an operation to move the operating body OP across a boundary defined by the line segment R21 typically in the upward direction and, in order to decrement a numerical value, it is necessary carry out an operation to move the operating body OP across a boundary defined by the line segment R21 typically in the downward direction. However, the directions of the movement do not have to be set in this way. For example, in such a configuration, in order to increment a numerical value, the operating body OP can also be moved across a boundary defined by the line segment R21 in the downward direction and, in order to decrement a numerical value, the operating body OP can also be moved across a boundary defined by the line segment R21 in the upward direction.

### 1-6: Processing Carried Out for No Operating Body Detected

Fig. 6 is a plurality of diagrams referred to in the following description of typical processing carried out by the information processing apparatus 100 according to the embodiment of the present disclosure if the information processing apparatus 100 no longer detects an operating body OP. Fig. 6 displays screens D41 and D42 each showing typical objects set by the control section 120 as numbers '2010,' '4,' '2,' '14,' '30' and '0.' In a state displayed on the screen D41, the detection section 110 detects no operating body OP. Thus, the screen D41 typically shows a short line segment R31 for each of the objects.

As the user moves an operating body OP to approach the noncontact interface 210 and the detection section 110 detects the position of the operating body OP, that is, detects an increase in proximity of the operating body OP, the control section 120 changes the display of the line segment R31 determined on the basis of the position of the operating body OP. As described before, the detection section 110 is capable of detecting the position of the operating body OP in a noncontact way. For example, by detecting the approach made by the operating body OP to the noncontact interface 210, the detection section 110 is capable of detecting the position of the operating body OP in a noncontact way. In the typical example shown in Fig. 6, the control section 120 changes the length of the line segment R31 in order to produce a line segment R32 which is a long line segment. In the typical example shown in Fig. 6, the processing section 130 displays a screen D42 showing the line segment R32.

When the user moves the operating body OP away from the noncontact interface 210, the detection section 110 no longer detects the position of the operating body OP, that is, detects a decrease in the proximity of the operating body OP. In this case, the control section 120 makes a transition back to a state of displaying the screen D41. By changing the display of a line segment in this way, the user is capable of grasping information on a position over which the operating body OP is to be moved in order to carry out the predetermined processing. 1-7: Third Typical Processing for an Operating Body Having Moved to Cross an Area Boundary

Fig. 7 is a plurality of diagrams referred to in the following description of third typical processing carried out by the information processing apparatus 100 according to the embodiment of the present disclosure if the information processing apparatus 100 detects a movement of the operating body OP and determines that the movement has crossed an area boundary. In a typical example shown in Fig. 7, the control section 120 displays a screen D51. In a state shown by the screen D51, the detection section 110 does not detect an operating body OP.

In this typical example, when the user makes use of a finger as a typical operating body OP and moves the operating body OP to approach the right upper corner of the screen D51 so that the detection section 110 is capable of detecting the position of the operating body OP, the control section 120 displays a screen D52 showing a polygon created on the right upper corner of the screen D51 by making use of a plurality of line segments R41. When the user moves the finger serving as the operating body OP away from the right upper corner of the screen D51, the control section 120 restores the screen D51 as the displayed screen. By the same token, when the user makes use of a finger as a typical operating body OP and moves the operating body OP to approach the left lower corner of the screen D51 so that the detection section 110 is capable of detecting the position of the operating body OP, the control section 120 displays a screen D53 showing a polygon created on the left lower corner of the screen D51 by making use of a plurality of line segments R41.

As described above, when the detection section 110 detects the position of the operating body OP in a noncontact way, the control section 120 is capable of displaying a polygon surrounded by a plurality of line segments R41 at the detected position of the operating body OP. However, the polygon surrounded by a plurality of line segments R41 can also be displayed at a position not related to the detected position of the operating body OP. In the typical example shown in Fig. 7, the control section 120 displays a hexagon created by making use of six line segments R41. However, the displayed polygon does not have to be a hexagon.

As described above, the control section 120 is capable of carrying out control to display a polygon created by assembling a plurality of line segments. Then, the control section 120 is capable of determining whether or not a movement detected by the detection section 110 as a movement of the operating body OP has crossed an area boundary by determining whether or not the operating body OP has crossed a boundary defined by the polygon between an internal area created inside the polygon to an external area created outside the polygon, moving from the internal area to the external area.

When the control section 120 determines that the movement of the operating body OP has crossed a boundary defined by any particular one of the line segments R41, the processing section 130 is capable of carrying out processing in accordance with a boundary defined by the particular line segment R41, which has been crossed by the movement of the operating body OP, as the predetermined processing. Typical examples G1 of the processing carried out by the processing section 130 in accordance with a boundary defined by the particular line segment R41 crossed by the movement of the operating body OP include 'Align icons,' 'Property,' 'Paste,' 'Update with most recent information,' 'Create a new one' and 'Restore the origin.' The control section 120 may display these typical processing examples G1 on a screen D53 as guidance.

Furthermore, in the typical processing carried out by the processing section 130 in accordance with a boundary defined by the particular line segment R41 crossed by the movement of the operating body OP, the processing section 130 may execute control to newly display another polygon having a boundary defined by the particular line segment R41 crossed by the movement of the operating body OP as one of a plurality of line segments R42 serving as the sides thereof. With such another polygon displayed, the control section 120 may determine whether or not a movement of the operating body OP has crossed a boundary defined by any particular one of the line segments R42 whereas the processing section 130 may carry out processing in accordance with a boundary defined by the particular line segment R42, which has been crossed by the movement of the operating body OP, as the predetermined processing. For example, the processing section 130 is capable of carrying out 'Align icons' in accordance with a boundary defined by the particular line segment R42 crossed by the movement of the operating body OP with reference to 'Creation date and time,' 'Size order,' 'Name order,' 'Type order' and 'Updating date and time.' The control section 120 may display these typical processing examples G2 on a screen D54 as guidance.

In addition, if the control section 120 determines that a boundary defined by the particular line segment R42 crossed by the movement of the operating body OP is the particular line segment R41 crossed before by the movement of the operating body OP, the processing section 130 restores the displayed screen from the screen D54 back to the screen D53. In the typical example shown in Fig. 7, a boundary defined by the particular line segment R41 crossed before by the movement of the operating body OP is the line segment corresponding to the typical processing example G1 of 'Align icons.'

By providing the configuration described above, it is possible to implement a hierarchical structure of operations. In addition, when the operating body OP is moved from a position outside the area of the polygon to a position inside the area, the processing section 130 may or may not carry out processing. If the processing section 130 carries out no processing when the operating body OP is moved from a position outside the area of the polygon to a position inside the area, however, it is possible to raise the degree of tolerability for reoperations carried out after once overlooking the operating body OP above the noncontact interface 210 and it is thus possible to reduce the number of incorrect operations.

### 1-8: Fourth Typical Processing for an Operating Body Having Moved to Cross an Area Boundary

Fig. 8 is a diagram referred to in the following description of fourth typical processing carried out by the information processing apparatus 100 according to the embodiment of the present disclosure if the information processing apparatus 100 detects a movement of the operating body OP and determines that the movement has crossed a boundary defined by an area boundary. In a typical example shown in Fig. 8, the control section 120 displays a screen D61.

As shown in Fig. 8, the control section 120 is capable of displaying several things including objects OB5 each serving as a menu item as well as line segments R51, R52 and R53 on the screen D61. If the control section 120 determines that a movement of the operating body OP has crossed a boundary defined by a line segment R51, the processing section 130 is capable of scrolling the objects OB5. The scrolling direction can be a direction opposite to the direction in which the movement of the operating body OP has been determined by the control section 120 to have crossed a boundary defined by the line segment R51. To put it concretely, if the control section 120 determines that a movement of the operating body OP has crossed a boundary defined by the line segment R51 in the downward vertical direction for example, the processing section 130 is capable of scrolling the objects OB5 in the upward vertical direction.

In addition, if the control section 120 determines that a movement of the operating body OP has crossed a boundary defined by a line segment R52 in a predetermined direction such as the left-to-right horizontal direction, the processing section 130 is capable of displaying objects OB6 on the screen D61 as child items of an object OB5 determined on the basis of the movement of the operating body OP. On top of that, if the control section 120 determines that a movement of the operating body OP has crossed a boundary defined by a line segment R52 in a direction opposite to the predetermined direction, on the other hand, the processing section 130 is capable of deleting objects OB6 from the screen D61. In this case, the objects OB6 to be deleted from the screen D61 are objects determined on the basis of the movement of the operating body OP whereas the direction opposite to the predetermined direction is the right-to-left horizontal direction.

In addition, if the control section 120 determines that a movement of the operating body OP has crossed a boundary defined by a line segment R53, the processing section 130 is capable of carrying out processing on an object OB6 determined on the basis of the movement of the operating body OP. To put it concretely, the processing section 130 is capable of carrying out processing to confirm the object OB6 displayed as a menu item.

### 1-9: Fifth Typical Processing for an Operating Body Having Moved to Cross an Area Boundary

Fig. 9 is a plurality of diagrams referred to in the following description of fifth typical processing carried out by the information processing apparatus 100 according to the embodiment of the present disclosure if the information processing apparatus 100 detects a movement of the operating body OP and determines that the movement has crossed an area boundary. In a typical example shown in Fig. 9, the control section 120 displays a screen D71 showing that, if the operating body OP is positioned on the left-hand side of a boundary defined by a line segment R61, confirmation processing is carried out and a screen D72 showing that, if the operating body OP is positioned on the right-hand side of a boundary defined by the line segment R61, on the other hand, cancellation processing is carried out.

That is to say, in this configuration, if the detection section 110 capable of detecting the position of an operating body OP in a noncontact way detects the position of the operating body OP, the control section 120 is capable of taking the position, which has been detected by the detection section 110 as the position of the operating body OP, as a reference point and displaying a description of predetermined processing, which is to be carried out, in advance when a movement of the operating body OP starts from the reference point and crosses an area boundary such as a boundary defined by a line segment R61 shown in Fig. 9. It is nice to display the description of the predetermined processing at a location close to the area boundary such as a boundary defined by the line segment R61. If the predetermined processing is to be carried out in accordance with the direction of the area-boundary crossing movement of the operating body OP, as shown by the screens D71 and D72, the displayed description of the predetermined processing is also changed in accordance with the position detected by the detection section 110 as the position of the operating body OP. In addition, it is also possible to display the descriptions of the predetermined processing for the movements made by the operating body OP in mutually opposite directions as non-striking descriptions such as semitransparent descriptions.

### 1-10: Sixth Typical Processing for an Operating Body Having Moved to Cross an Area Boundary

Fig. 10 is a plurality of diagrams referred to in the following description of sixth typical processing carried out by the information processing apparatus 100 according to the embodiment of the present disclosure if the information processing apparatus 100 detects a movement of the operating body OP and determines that the movement has crossed an area boundary. In a typical example shown in Fig. 10, the control section 120 displays a screen D81 showing images IM1. The control section 120 is capable of displaying an enlarged image IM1 determined typically on the basis of the position of the operating body OP. A screen D82 shows a state in which an enlarged image IM1 determined typically on the basis of the position of the operating body OP is displayed. If the detection section 110 further detects a movement made by the image IM1 determined typically on the basis of the position of the operating body OP as a movement according to a movement of the operating body OP, the processing section 130 is capable of carrying out processing in accordance with the area of a destination to which the image IM1 has been moved as described below by referring to the lower diagram of Fig. 10.

For example, when the detection section 110 detects a movement made by a particular image IM1 determined typically on the basis of the position of the operating body OP as a movement to an area A21, the processing section 130 carries out processing to display the whole of the particular image IM1. In addition, when the detection section 110 detects a movement made by a particular image IM1 determined typically on the basis of the position of the operating body OP as a movement to an area A22, the processing section 130 carries out processing to upload the particular image IM1 to a community site C2. On top of that, when the detection section 110 detects a movement made by a particular image IM1 determined typically on the basis of the position of the operating body OP as a movement to an area A23, the processing section 130 carries out processing to delete the particular image IM1. In addition, when the detection section 110 detects a movement made by a particular image IM1 determined typically on the basis of the position of the operating body OP as a movement to an area A24, the processing section 130 carries out processing to upload the particular image IM1 to a community site C1.

On top of that, the screen D82 also shows a line segment R62 used for changing the mode. If the detection section 110 determines that a movement of the operating body OP has crossed a boundary defined by the line segment R62, the processing section 130 is capable of carrying out processing to change the mode. For example, a mode change is assumed to be a transition from the screen D82 to the immediately succeeding screen or a transition from the screen D82 to the immediately preceding screen.

In accordance with such control, a large-size functional item is displayed at any of the four corners of a screen in a format that can be recognized by the user with ease and processing can be confirmed by merely moving the operating body OP to cross a boundary defined by the line segment without dropping onto an area. Thus, in comparison with the method of dropping onto an area, it is expected that the operation load borne by the user can be reduced. In the typical example shown in Fig. 10, in the state of an index screen such as the screen D81, the images IM1 can be scrolled by carrying out a drag operation. Thus, in a state shown by the screen D81, by continuously pressing a specific image IM1 for a long time in a drag operation and releasing the specific image IM1 in an area A23 serving as the destination of the drag operation, it is possible to make a transition from the screen D81 to the screen D82.

### 1-11: Seventh Typical Processing for an Operating Body Having Moved to Cross an Area Boundary

Fig. 11 is a plurality of diagrams referred to in the following description of seventh typical processing carried out by the information processing apparatus 100 according to the embodiment of the present disclosure if the information processing apparatus 100 detects a movement of the operating body OP and determines that the movement has crossed an area boundary. In a typical example shown in Fig. 11, the control section 120 displays a screen D91 showing a line segment R71. The detection section 110 detects a movement of the operating body OP in a noncontact way whereas the control section 120 determines whether or not the movement detected by the detection section 110 as the movement of the operating body OP has crossed a boundary defined by the line segment R71 also in a noncontact way. If the control section 120 determines that the movement detected by the detection section 110 as the movement of the operating body OP has crossed a boundary defined by the line segment R71 in a noncontact way, the processing section 130 is capable of carrying out first processing.

However, it is also possible to provide a configuration in which the control section 120 displays a screen D92 showing the line segment R71. The detection section 110 detects a movement of the operating body OP in a contact way whereas the control section 120 determines whether or not the movement detected by the detection section 110 as the movement of the operating body OP has crossed a boundary defined by the line segment R71 also in a contact way. If the control section 120 determines that the movement detected by the detection section 110 as the movement of the operating body OP has crossed a boundary defined by the line segment R71 in a contact way, the processing section 130 is capable of carrying out second processing.

As described above, different kinds of processing can be carried out in accordance with whether the operating body OP is in a state of contact with a screen or a state of noncontact with the screen. As shown in Fig. 11, it is possible to change the broad overview of the screen in a contact state and to switch the processing to be carried out when the movement of the operating body OP has crossed a boundary defined by the line segment R71 in this state. 1-12: Eighth Typical Processing for an Operating Body Having Moved to Cross an Area Boundary

Fig. 12 is a plurality of diagrams referred to in the following description of eighth typical processing carried out by the information processing apparatus 100 according to the embodiment of the present disclosure if the information processing apparatus 100 detects a movement of the operating body OP and determines that the movement has crossed an area boundary. In a typical example shown in Fig. 12, the control section 120 displays a screen D101 showing a line segment R81. The detection section 110 detects a movement of the operating body OP whereas the control section 120 determines whether or not the movement detected by the detection section 110 as the movement of the operating body OP has crossed a boundary defined by the line segment R81. If the control section 120 determines that the movement detected by the detection section 110 as the movement of the operating body OP has crossed a boundary defined by the line segment R81, the processing section 130 is capable of carrying out predetermined processing.

In this case, if the control section 120 determines that a movement detected by the detection section 110 as the movement of the operating body OP has crossed a boundary defined by the line segment R81, the control section 120 is capable of recognizing the direction of the movement of the operating body OP. In addition, the processing section 130 is capable of carrying out predetermined processing in accordance with the direction recognized by the control section 120. For example, the processing section 130 newly displays a line segment R81 in the direction recognized by the control section 120. Then, the control section 120 is capable of determining whether or not a movement detected by the detection section 110 as the movement of the operating body OP has crossed a boundary defined by the newly displayed line segment R81. In this case, if the control section 120 determines that a movement detected by the detection section 110 as the movement of the operating body OP has crossed a boundary defined by the newly displayed line segment R81, the processing section 130 is capable of carrying out predetermined processing in accordance with the newly displayed line segment R81.

In some cases, it may be difficult to carry out an operation to move the operating body OP across an area boundary consecutively a plurality of times. By carrying out the control described above, however, it is easy to carry out an operation to move the operating body OP across an area boundary consecutively a plurality of times. In an operation to adjust a quantity by a large amount of adjustment in some cases and a small amount of adjustment in other cases as is the case with an operation to adjust the volume of an output sound for example, that is, a process to adjust a control signal, it is possible to carry out an operation to move the operating body OP across a boundary defined by one line segment R81 as many times as demanded. Rather than carry out this operation to move the operating body OP across a boundary defined by one line segment R81 in a predetermined direction as many times as demanded, it is possible to display a plurality of line segments R81 each provided for carrying out the same function if the operating body OP crosses in the same direction at a location to which the operating body OP is to be moved in a predetermined direction. In this case, by merely moving the operating body OP across a plurality of boundaries defined by such line segments R81 in a predetermined direction as shown in the lower diagram of Fig. 12, it is possible to invoke a function to carry out the operation to move the operating body OP across a boundary defined by one line segment R81 consecutively for the same plurality of times in the same direction as the predetermined direction. In addition, it is also possible to design an interface in which, as the guidance for a gesture to cross a boundary defined by a line segment R81, a boundary defined by a newly displayed line segment R81 can be crossed in order to eventually complete a certain operation.

### 1-13: Details of a Technique for Detecting a Movement Made by an Operating Body to Cross an Area Boundary

Fig. 13 is a plurality of explanatory diagrams referred to in the following description of details of a technique adopted by the information processing apparatus 100 according to the embodiment of the present disclosure to detect a movement of the operating body OP as a movement that has crossed an area boundary. A process to detect an operation carried out against a line segment R91 is simple as shown in Fig. 13. The control section 120 takes areas on both sides of a line segment R91 as first and second areas respectively. The first and second areas can thus be areas on the upper and lower sides of the line segment R91 or areas on the left-hand and right-hand sides of the line segment R91. When the operating body OP appears on the scene, for each individual one of line segments R91, the control section 120 determines whether the operating body OP appears in the first or second area on the two sides of the individual line segment R91. At the next detection time, the operating body OP may have made a transition crossing a boundary between the first and second areas, that is, a transition from the first area to the second area or from the second area to the first area. In this case, if the intersection of the locus of the operating body OP and the boundary is a point on the line segment R92, the processing section 130 carries out an operation to start a function according to the direction in which the operating body OP has crossed the line segment R92.

### 1-14: Flow of Processing Carried Out by the Information Processing Apparatus

Fig. 14 shows a flowchart representing the flow of processing carried out by the information processing apparatus 100 according to the embodiment of the present disclosure. As shown in Fig. 14, the flowchart begins with a step S101 at which, in the information processing apparatus 100 according to the embodiment of the present disclosure, the detection section 110 receives a coordinate input in a noncontact way. Then, at the next step S102, the control section 120 produces a result of determination as to whether or not the input has crossed an area boundary. If the determination result produced by the control section 120 at the step S102 is No indicating that the input did not cross an area boundary, the flow of the processing goes on to a step S104.

If the determination result produced by the control section 120 at the step S102 is Yes indicating that the input has crossed an area boundary, on the other hand, the flow of the processing goes on to a step S103 at which the predetermined processing is carried out. Then, the flow of the processing goes on to the step S104 at which the control section 120 produces a result of determination as to whether or not a termination operation has been carried out. If the determination result produced by the control section 120 at the step S104 is No indicating that the termination operation has not been carried out, the flow of the processing goes back to the step S101. If the determination result produced by the control section 120 at the step S104 is Yes indicating that the termination operation has been carried out, on the other hand, the processing is ended.

### 2: Modifications

The preferred embodiment of the present disclosure has been explained so far in detail by referring to appended diagrams. However, implementations of the present disclosure are by no means limited to this preferred embodiment. It is obvious that a person having mediocre knowledge in the fields of technologies related to the present disclosure is capable of coming up with ideas for a variety of changes and modifications within technological concept domains described in patent claims appended to this specification of the present disclosure. It is a matter of course, however, that such changes and modifications fall within the technological concept domains described in the patent claims appended to this specification of the present disclosure.

### 3: Conclusions

As described above, in accordance with the present disclosure, it is possible to allow an information processing apparatus capable of detecting the movement of an operating body in a noncontact way to carry out predetermined processing with ease. For example, triggered by merely a change of information on a position detected by an operating input device, the information processing apparatus is capable of carrying out a variety of operations including confirmations. In the case of the related-art information processing apparatus carrying out a confirmation in accordance with an operation carried out on a button, it is necessary to separately provide an operation device such as the button. In addition, the quantity of an operation load borne by the user increases accordingly and the user is required to be present in a condition making the user capable of operating the button. Thus, the condition imposes restrictions on operations that can be carried out on the button. In accordance with the embodiment, on the other hand, it is possible to carry out a desired confirmation operation by merely moving an operating body across a boundary defined by an item on a screen in a direction determined in advance. For example, a noncontact input device is capable of operating on the basis of only a change in specified coordinates.

In addition, if related-art gesture commands are used, it is necessary to carry out a learning process in order to remember relations between the gesture commands and the operations intended by the commands. If a gesture is entered by operating a pointer, it is difficult to identify an object displayed on a screen. In accordance with the embodiment, on the other hand, an object displayed on a screen is clearly expressed and guidance for carrying out an operation can also be shown as well. Thus, a learning process can be carried out with ease.

It is also possible to conceive a method for carrying out the same operations by defining a sensitive area that will give a response to an operation to point out the inside of a certain defined area. However, this method has a possible demerit that, in a certain screen area, only one type of function can be defined. In addition, there is undesirably a reaction responding to only an inadvertent operation to pass through the screen area. Thus, the method has an additional demerit that layout restrictions are imposed. In addition, with this condition sustained as it is, a reverse operation such as a restoration is difficult to define and it is hard to create a state in which a plurality of options can be selected in a hierarchical manner. On top of that, in the case of a small area, depending on the input technique, it is difficult to stay in the state so that it is hard to adopt the method as a trigger. In accordance with the embodiment, on the other hand, these demerits can be eliminated effectively.

The present disclosure contains subject matter related to that disclosed in Japanese Priority Patent Application JP 2010-200149 filed in the Japan Patent Office on September 7, 2010.

It should be understood by those skilled in the art that various modifications, combinations, sub-combinations and alterations may occur depending on design requirements and other factors in so far as they are within the scope of the appended claims or the equivalents thereof.

Various preferred techniques are described in the following clauses
Clause 1: The device as recited in appended claim 12, where in the interface is configured to:
   determine a side of the polygon defining the boundary that the member crosses; and initiate execution of the fourth process based on the determined side. Clause 2: The device as recited in appended claim 1, and wherein the first process comprises generating a control signal and wherein the interface is configured to:
      consecutively display an object defining a new boundary when it is determined that the member crosses a previous boundary.
Clause 3: The device as recited in clause 2, wherein the control signal is based on the number of consecutively displayed objects defining boundaries that the member crosses.
Clause 4: The device as recited in appended claim 1, wherein the interface is configured to:
   detect contact motion of the member;
   determine, from the detected contact motion, whether the member crosses a first boundary; and initiate execution of a second process by the processor, when it is determined that the member crosses the first boundary.

## Claims

1. An electronic device, the device comprising:
a processor;
a display; and
an interface configured to
detect non-contact motion of an operation member,
determine, from the detected motion, whether the member crosses a first boundary defined by the display, and
initiate execution of a first process by the processor, when it is determined that the member crosses the first boundary.

2. The device as recited in claim 1, wherein the first boundary is associated with an object on the display.

3. The device as recited in claim 2, wherein the object is an indicator of a numeric value.

4. The device as recited in claim 3, wherein the first process comprises changing the numeric value.

5. The device as recited in claim 1, wherein the interface is configured to:
determine from the detected motion, a direction of movement of the member when the member crosses the first boundary; and
initiate execution of the first process based upon the determined direction.

6. The device as recited in claim 1, wherein the first boundary is defined by a line segment on the display.

7. The device as recited in claim 1, wherein the first boundary and a plurality of boundaries are defined by a polygon on the display.

8. The device as recited in claim 1, wherein the interface is configured to determine a change in proximity of the operation member with respect to the interface.

9. The device as recited in claim 8, wherein the interface is configured to initiate a second process upon detection of an increased proximity and a third process upon detection of a decreased proximity.

10. The device as recited in claim 8, wherein:
the first boundary is associated with a displayed object; and
one of the second process or the third process comprises changing the displayed object.

11. The device as recited in claim 9, wherein the second process comprises displaying a plurality of boundaries defined by a polygon.

12. The device as recited in claim 11, wherein the interface is configured to:
determine whether the member crosses a boundary defined by the polygon; and
initiate execution of a fourth process by the processor, when it is determined that the member crosses a boundary defined by the polygon.

13. The device as recited in claim 1, wherein the first process comprises at least one of scrolling, playing an object defining a second boundary, and generating a control signal.

14. A method comprising:
detecting non-contact motion of an operation member;
determining, from the detected motion, whether the member crosses a first boundary defined by a display; and
initiating execution of a first process by a processor, when it is determined that the member crosses the first boundary.

15. A tangibly embodied non-transitory computer-readable storage medium including instructions that, when executed by a processor, perform a method for a user interface, the method comprising:
detecting non-contact motion of an operation member;
determining, from the detected motion, whether the member crosses a first boundary defined by a display; and
initiating execution of a first process by a processor, when it is determined that the member crosses the first boundary.
